# FASCICULE DE BREVET EUROPEEN

(11) **EP 2 917 069 B1**
(45) Date de publication et mention de la délivrance du brevet: **14.12.2016**
(21) Numéro de dépôt: 13792412.2
(22) Date de dépôt: 17.10.2013
(51) Int. Cl.: B60P 1/43, A61G 3/06

(54) **ENSEMBLE FORMANT RAMPE D'ACCÈS POUR DES PERSONNES À MOBILITÉ RÉDUITE ET VÉHICULE AINSI ÉQUIPÉ**
ANORDNUNG ZUR FORMUNG EINER ZUGANGSRAMPE FÜR PERSONEN MIT EINGESCHRÄNKTER MOBILITÄT UND DAMIT AUSGESTATTETES FAHRZEUG
ASSEMBLY FORMING AN ACCESS RAMP FOR PERSONS WITH REDUCED MOBILITY AND VEHICLE EQUIPPED THEREWITH

(30) Priorité: 06.11.2012 FR 1260500
(43) Date de publication de la demande: 16.09.2015
(73) Titulaire: Renault Tech, 27400 Heudebouville (FR)
(72) Inventeur: TEIXEIRA, Carlos, F-76100 Rouen (FR); MERCIER, Thomas, F-27940 Venables (FR); BUREL, Jonathan, F-27190 Emanville (FR); HAGLON, Fabien, F-14130 Le Breuil En Auge (FR)
(86) Numéro de dépôt international: PCT/FR2013/052476
(87) Numéro de publication internationale: WO 2014/072603

(56) Documents cités:
- WO-A1-2010/003387
- DE-U1- 20 016 308
- GB-A- 2 473 031

## Description

### Domaine de l'invention :

La présente invention concerne un ensemble formant rampe d'accès pour des personnes à mobilité réduite et un véhicule ainsi équipé.

### Etat de la technique et problème posé :

La manipulation des rampes d'accès aux véhicules pour le transport de personnes à mobilité réduite, typiquement l'accès en fauteuil roulant à l'arrière du véhicule, est difficile et peu ergonomique. Les véhicules actuellement utilisés pour le transport de personnes à mobilité réduite, possédant un plan incliné dans la continuité de la rampe, contraignent l'utilisateur à concilier avec cette pente lorsqu'il utilise le véhicule en dehors de la présence de la personne en fauteuil. Ainsi il est malaisé et complexe d'obtenir un plancher plat dans le véhicule avec les dispositifs existants, lorsque le compartiment arrière n'est pas occupé par une personne en fauteuil.

En outre le document WO2010/003387A1 décrit un ensemble formant rampe d'accès pour des personnes à mobilité réduite à l'arrière d'un véhicule automobile, cet ensemble comportant un panneau mobile entre plusieurs configurations. Dans cet ensemble connu, le panneau est retourné environ à 180 entre une position de plancher plat dans le véhicule et une position déployée formant rampe d'accès à l'arrière du véhicule. Une telle cinématique nécessite de s'introduire dans le véhicule pour effectuer les manipulations ou d'agir à distance sur une partie avant du panneau pour le relever, ce qui n'est pas aisé et ergonomique.

L'invention vise à pallier ces inconvénients en proposant un ensemble formant rampe d'accès qui soit particulièrement commode et ergonomique.

### Objet de l'invention :

A cet effet, l'invention a pour objet un ensemble formant rampe d'accès pour des personnes à mobilité réduite, destiné à équiper l'arrière d'un véhicule automobile, l'ensemble comprenant un panneau monté sur un châssis, par l'intermédiaire de moyens de liaison conformés pour maintenir le panneau dans au moins trois configuration d'utilisation, parmi lesquelles le panneau constitue un plancher sensiblement horizontal en partie supérieure du châssis dans une première configuration, le panneau est relevé à l'arrière du châssis de façon sensiblement verticale dans une seconde configuration et le panneau est déployé à l'arrière du châssis de façon inclinée pour former une rampe d'accès dans une troisième configuration, les moyens de liaison étant en outre conformés pour assurer le guidage du panneau lors de son déplacement successif entre la première, la seconde et la troisième configuration, le châssis ayant la forme générale d'un caisson pourvu d'un fond, de parois latérales et d'une paroi avant, le caisson étant ouvert en partie supérieure et ayant des dimensions correspondant sensiblement à celles du panneau de manière que ce dernier referme le caisson en partie supérieure dans la première configuration, les moyens de liaison du panneau comprenant une ridelle articulée sur un bord arrière du caisson entre une position relevée de fermeture du caisson et une position déployée correspondant à la troisième configuration du panneau formant la rampe d'accès, les moyens de liaison comprenant des glissières à galets avant assurant un coulissement de la partie avant du panneau par rapport aux parois latérales du châssis suivant une direction inclinée par rapport à l'horizontale, de sorte que la partie avant du panneau s'abaisse à mesure qu'elle progresse vers l'arrière, les moyens de liaison comprenant en outre des glissières à galets arrière assurant un coulissement des bords latéraux du panneau par rapport aux bords latéraux de la ridelle, les galets avant étant situés plus bas que les galets arrière lorsque la ridelle est en position relevée et que le panneau est dans la seconde configuration, l'ensemble comprenant encore des premiers moyens de verrouillage aptes à solidariser le bord avant du panneau et la base de la ridelle lorsque le panneau est disposé dans la seconde et la troisième configuration ou entre ces dernières, ces premiers moyens de verrouillage étant libérables manuellement.

L'ensemble selon l'invention offre une polyvalence et une souplesse d'utilisation remarquables compte tenu des multiples configurations que peut prendre le panneau. Le dispositif selon l'invention offre un plancher plat proche de celui d'un véhicule classique (ou du véhicule d'origine avant son adaptation) en utilisation normale, ou de façon alternative un plan incliné agrémenté d'une rampe lors du transport de personne à mobilité réduite. L'utilisation est simple, intuitive et ergonomique en raison des moyens de liaison agencés pour maintenir le panneau dans ses différentes configurations et le guider dans ses déplacements entre celles-ci. Il est à noter que la transformation du système de l'une à l'autre position ne nécessite ni outils, ni matériel quelconque et qu'elle s'effectue instantanément. De plus cet ensemble selon l'invention peut être manipulé sans besoin de pénétrer dans l'habitacle du véhicule et sans agir à distance sur une partie éloignée du panneau. En effet la personne qui effectue les manipulations et se trouve à l'arrière du véhicule peut relever le panneau aisément en agissant directement sur des éléments à proximité immédiate.

Selon d'autres caractéristiques avantageuses de l'invention,
- l'ensemble comprend des seconds moyens de verrouillage aptes à solidariser les bords latéraux de la ridelle en position relevée avec les parois latérales du caisson, ces seconds moyens de verrouillage étant libérables manuellement.
- le panneau comprend des profilés latéraux, notamment en aluminium, sur chacun desquels sont montés, dans leur partie avant, des supports de galets et des galets associés, ces derniers étant déplaçables dans des rainures correspondantes conformées dans les parois latérales du caisson, pour former les glissières à galets avant,
- les premiers moyens de verrouillage sont constitués de deux pênes montés sur chacun des supports de galets, et de deux gâches correspondantes montées sur les bords latéraux de la ridelle à la base de celle-ci,
- l'ensemble comprend des moyens d'arrêt montés sur les supports et conformés pour coopérer avec des formes complémentaires ménagées sur les parois latérales du caisson, de façon à maintenir le panneau de façon stable au moins dans la première configuration,

L'invention a également pour objet un véhicule automobile comprenant un ensemble formant rampe d'accès ayant tout ou partie des caractéristiques précédentes.

L'invention a encore pour objet un procédé d'utilisation d'un ensemble formant rampe d'accès ayant tout ou partie des caractéristiques précédentes, le procédé comprenant les étapes suivantes :
- coulissement du panneau vers l'arrière à partir de la première configuration, ce coulissement étant combiné à une élévation du panneau en position sensiblement verticale, jusqu'à la seconde configuration,
- verrouillage du bord avant du panneau avec la base de la ridelle, par les premiers moyens de verrouillage,
- libération des seconds moyens de verrouillage maintenant la ridelle en position relevée,
- déploiement simultané du panneau et de la ridelle vers l'arrière en articulant cette dernière par rapport au bord arrière du caisson.

### Description de l'invention :

L'invention sera mieux comprise à la lecture de la description suivante d'un exemple non limitatif de l'invention, et à la lumière des dessins annexés sur lesquels :
- la figure 1 représente une vue arrière d'un véhicule automobile équipé d'un ensemble formant rampe d'accès selon l'invention, l'ensemble étant dans la première configuration d'utilisation dite de « plancher horizontal »,
- la figure 2 est une vue en perspective de l'ensemble seul formant rampe d'accès selon l'invention, l'ensemble étant dans la première configuration correspondant à la figure 1,
- les figures 3 et 4 sont des vues du véhicule et de l'ensemble formant rampe d'accès correspondant respectivement aux figures 1 et 2, dans lesquelles l'ensemble est en phase de déploiement entre la première configuration d'utilisation et une seconde configuration d'utilisation, dite de « panneau relevé »,
- les figures 5 et 6 sont des vues du véhicule et de l'ensemble formant rampe d'accès correspondant respectivement aux figures 1 et 2, dans lesquelles l'ensemble est dans la seconde configuration d'utilisation,
- les figures 7 et 8 sont des vues du véhicule et de l'ensemble formant rampe d'accès correspondant respectivement aux figures 1 et 2, dans lesquelles l'ensemble est en phase de déploiement entre la seconde configuration d'utilisation et une troisième configuration d'utilisation, dite de « rampe d'accès »,
- les figures 9 et 10 sont des vues du véhicule et de l'ensemble formant rampe d'accès correspondant respectivement aux figures 1 et 2, dans lesquelles l'ensemble est dans la troisième configuration d'utilisation,
- la figure 11 est une vue en perspective éclatée du panneau de l'ensemble formant rampe d'accès selon l'invention et de ces éléments de liaison adjacents,
- la figure 12 est une vue éclatée de détail des moyens de liaison de la figure 11, situés en partie avant de l'ensemble,
- les figures 13 et 14 sont des vues éclatées d'une ridelle arrière de l'ensemble suivant l'invention, illustrant des moyens de verrouillage entre le panneau et la ridelle et entre la ridelle et le caisson.

Dans la description, les notions « avant-arrière » sont indiquées en référence au repère XYZ classique du véhicule, dans lequel X désigne la direction longitudinale du véhicule, orientée vers l'arrière, Y la direction transversale au véhicule, orientée vers la droite, et Z la direction verticale.

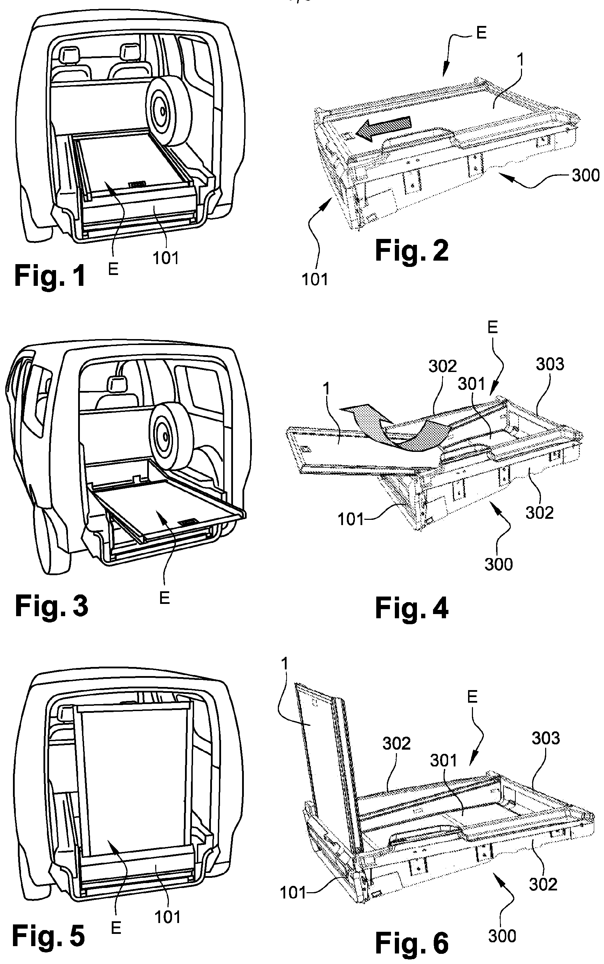

On a représenté aux figures 1, 3, 5, 7 et 9 une vue de l'arrière d'un véhicule automobile pourvu d'un ensemble E formant rampe d'accès suivant l'invention. Pour la clarté de l'illustration, l'ouvrant arrière n'est pas représenté. Les figures 2, 4, 6, 8 et 10 illustrent un tel ensemble E qui a été monté dans le véhicule pour son adaptation aux personnes à mobilité réduite. Ces figures montrent les différentes phases et configurations successives d'utilisation de l'ensemble E.

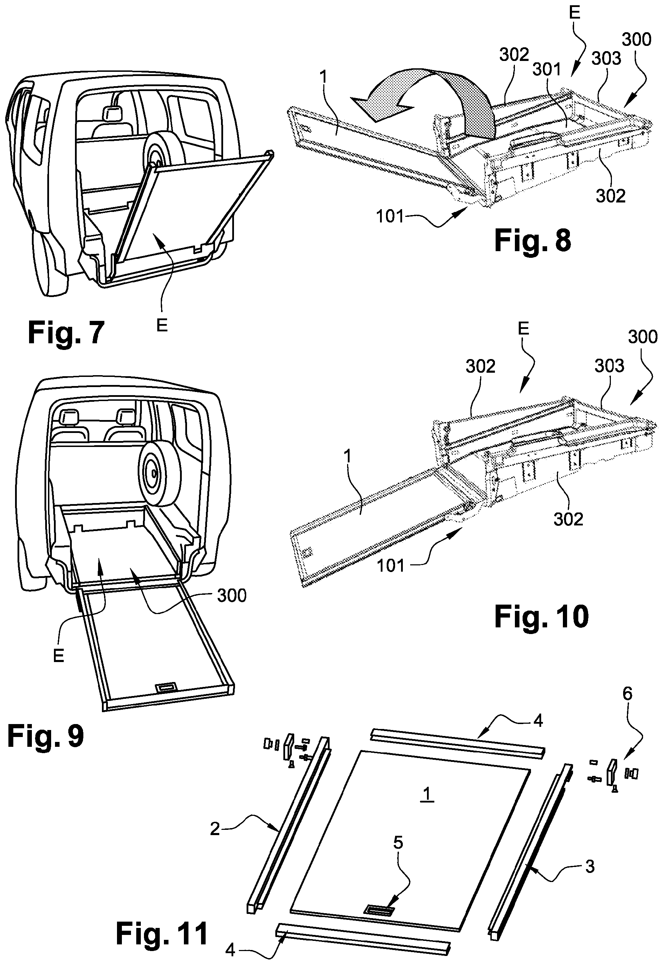

En référence à la figure 11, cet ensemble E comprend un panneau 1, typiquement constituée d'une plaque en alliage léger, monté sur un châssis par l'intermédiaire de moyens de liaison conformés pour maintenir le panneau 1 dans au moins trois configuration d'utilisation :
- dans une première configuration illustrée aux figures 1 et 2, le panneau 1 constitue un plancher sensiblement horizontal en partie supérieure du châssis. L'expression « sensiblement horizontal » signifie qu'un angle minime par rapport à un plan horizontal (par exemple moins de 5°) est tout à fait admissible en tant que plancher plat et s'inscrit parfaitement dans le cadre de l'invention.
- dans une seconde configuration d'utilisation illustrée aux figures 5 et 6, le panneau 1 est relevé à l'arrière du châssis de façon sensiblement verticale. La même remarque que précédemment s'applique à l'expression « sensiblement vertical » par rapport à un plan vertical.
- dans une troisième configuration d'utilisation illustrée aux figures 9 et 10, le panneau 1 est déployé à l'arrière du châssis de façon inclinée pour former une rampe d'accès.

Des moyens de liaison qui seront décrits ci-après sont conformés pour assurer le guidage du panneau 1 lors de son déplacement successif entre la première, la seconde et la troisième configuration.

Le châssis 300 sur lequel est monté le panneau 1 à la forme générale d'un caisson pourvu d'un fond 301, de parois latérales 302 et d'une paroi avant 303 (fig. 2, 4, 6, 8, 10). Le caisson est ouvert en partie supérieure et a des dimensions correspondant sensiblement à celles du panneau 1. Ce dernier peut de ce fait recouvrir le caisson pour le fermer dans la première configuration.

Les moyens de liaison du panneau 1 au châssis 300 comprennent une ridelle 101 articulée sur un bord arrière du châssis 300 entre une position relevée de fermeture du caisson (fig. 1 à 6) et une position déployée correspondant à la troisième configuration du panneau 1 formant la rampe d'accès (fig. 9 et 10).

Le panneau 1 est bordé d'un cadre périphérique en aluminium. Ce cadre comporte des profilés latéraux, orientés suivant la direction longitudinale X du véhicule, supportant des galets avant 8. Ceux-ci sont situés en partie avant du panneau 1 et assurent un coulissement de la partie avant du panneau 1 par rapport aux parois latérales 302 du châssis 300 suivant une direction inclinée par rapport à l'horizontale, de sorte que la partie avant du panneau s'abaisse à mesure qu'elle progresse vers l'arrière.

Cette inclinaison est par exemple comprise entre 5 et 30° par rapport à l'horizontale.

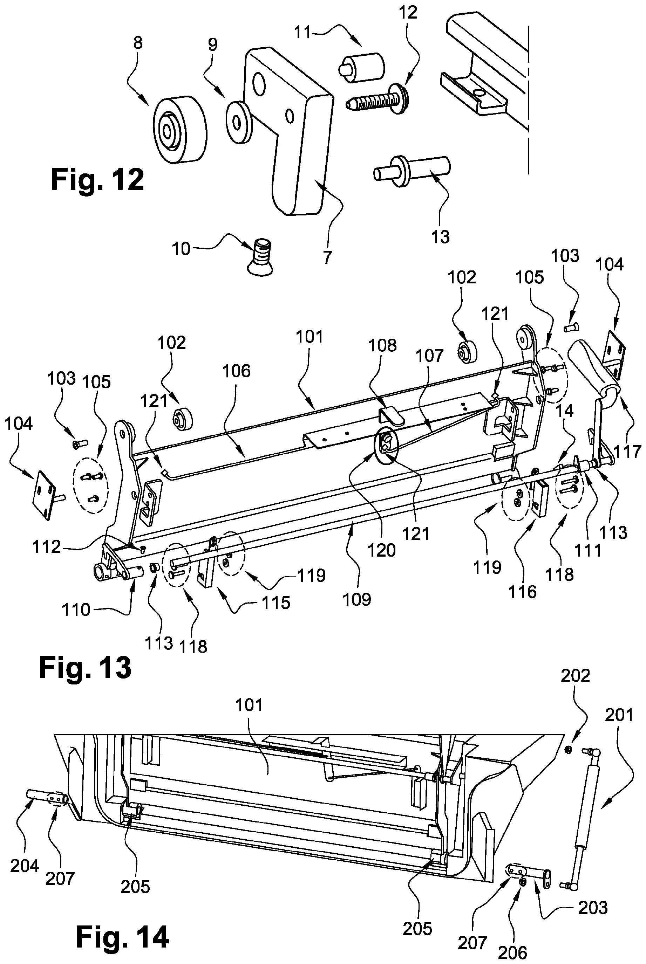

Les galets avant 8 sont montés sur des supports 6, 7 en forme d'équerre fixés sur les profilés latéraux 2, 3 (figures 11, 12). Les galets avant 8 sont déplaçables dans des rainures (ou rail) correspondantes conformées dans les parois latérales 302 du caisson pour former les glissières à galets avant 8. Les supports 6, 7 sont chacun fixés aux profilés latéraux par une vis 12. Une platine ou un rebord de calage peut être prévu(e) sur chaque profilé latéral pour indexer le support correspondant et encaisser les efforts transmis par le support.

Les moyens de liaison comprenant en outre des glissières à galets arrière 102 assurant un coulissement des profilés latéraux 2, 3 du panneau 1 par rapport aux bords latéraux de la ridelle 101. Des galets arrière 102 sont de ce fait monté en partie supérieure des bords latéraux de la ridelle 101 et coulissent dans les profilés latéraux 2, 3 du panneau 1. Les galets avant 8 des glissières avant sont situés plus bas que les galets arrière 102 des glissières arrière lorsque la ridelle 101 est en position relevée et que le panneau 1 est dans la seconde configuration, comme illustré aux figures 5 et 6.

On note que le coulissement vers l'arrière simultané des galets avant 8 dans les rainures des parois latérales 302 du châssis et des galets arrière 102 dans les profilés latéraux 2, 3 du panneau 1 permet une élévation naturelle et à effort limité du panneau jusqu'à la position verticale.

L'ensemble comprend des premiers moyens de verrouillage aptes à solidariser le bord avant du panneau 1 et la base de la ridelle 101 lorsque le panneau 1 est disposé dans la seconde et la troisième configuration ou entre ces dernières. Cette fixation est assurée par l'intermédiaire de deux pênes 13 portés de chaque côté du panneau par les supports 6, 7 (figure 12). Ces pênes 13 sont orientés suivant la direction transversale Y et viennent s'accrocher dans des gâches ou serrures 115, 116 prévues sur la ridelle 101. Cet accrochage doublé de la liaison entre les galets arrière 102 et les bords latéraux du panneau 1 assurent une solidarisation complète du panneau 1 et de la ridelle 101, qui peuvent désormais être manipulés d'un même bloc.

Ces premiers moyens de verrouillage sont libérables manuellement, pour désolidariser le panneau 1 et la ridelle 101 lors de la manipulation inverse. L'ensemble comprend par ailleurs des seconds moyens de verrouillage aptes à solidariser / désolidariser les bords latéraux de la ridelle 101 en position relevée avec les parois latérales 302 du caisson.

Comme illustré à la figure 13, un crochet 110 de déverrouillage de la ridelle 101 qui est prisonnier du caisson et est actionnable par une poignée 117 par l'intermédiaire d'une tringle 109 peut être libéré de façon à libérer du même coup la ridelle 101 qui peut de ce fait être pivotée de sa position relevée jusqu'à sa position déployée à l'arrière du véhicule. Cette rotation de la ridelle 101 autour de son articulation inférieure par rapport au châssis 300, entraîne avec elle le panneau 1 pour constituer la rampe d'accès lorsque le panneau 1 prend appui sur le sol. L'articulation inférieure est constituée par des paliers lisses épaulés 205 (figure 14) conformés sur les parois latérales 302 du châssis, dans lesquels sont introduits des axes 203, 204 de charnière traversant ces parois latérales 302 et pénétrant latéralement dans les bords latéraux de la ridelle 101. Ces axes peuvent être arrêtés suivants la direction transversale Y par des goupilles 207.

Les seconds moyens de verrouillage sont également libérables manuellement comme expliqué ci-dessus grâce à la poignée 117.

Des moyens d'assistance sont en outre prévus entre la ridelle 101 et le châssis de façon à faciliter la descente et la remontée de la ridelle 101 et du panneau 1. Ceux-ci sont constitués d'un vérin à gaz 201 (figure 14). Lors de la descente, l'utilisateur peut néanmoins être tenu d'accompagner le panneau 1 jusqu'au sol (position rampe).

Lors de la manipulation inverse, le panneau 1 et la ridelle sont articulés par rapport à leur base jusqu'à ce que le crochet 110 soit prisonnier du châssis 300. Pour libérer le panneau 1 de la ridelle 101, le levier 108 en liaison pivot avec la ridelle 101 est actionné, entraînant de ce fait les tringles 106, 107 qui commandent les gâches 115, 116. Celles-ci libèrent les pênes 13 du panneau 1 qui peut ensuite être déplacé en direction de sa première configuration, correspondant au plancher plat sensiblement horizontal. Les moyens de liaison décrits précédemment assurent le guidage du panneau par rapport au châssis. Des moyens d'arrêt sont prévus entre le panneau 1 et le châssis 300 de façon à maintenir le panneau dans la première configuration, correspondant au plancher horizontal. Ces moyens d'arrêt sont typiquement constitués de poussoirs à ressort 11 portés par les supports 6, 7. Ces poussoirs à ressort 11 coopèrent avec des formes creuses complémentaires assurant le maintien du panneau 1 dans une position stable.

Bien entendu, l'invention n'est pas limitée aux modes ou variantes de réalisation décrits précédemment.

## Revendications

1. Ensemble formant rampe d'accès pour des personnes à mobilité réduite, destiné à équiper l'arrière d'un véhicule automobile, comprenant un panneau (1) monté sur un châssis (300), par l'intermédiaire de moyens de liaison conformés pour maintenir le panneau (1) dans au moins trois configuration d'utilisation, parmi lesquelles le panneau (1) constitue un plancher sensiblement horizontal en partie supérieure du châssis (300) dans une première configuration, le panneau (1) est relevé à l'arrière du châssis (300) de façon sensiblement verticale dans une seconde configuration et le panneau (1) est déployé à l'arrière du châssis (300) de façon inclinée pour former une rampe d'accès dans une troisième configuration, les moyens de liaison étant en outre conformés pour assurer le guidage du panneau (1) lors de son déplacement successif entre la première, la seconde et la troisième configuration, le châssis (300) ayant la forme générale d'un caisson pourvu d'un fond (301), de parois latérales (302) et d'une paroi avant (303), le caisson étant ouvert en partie supérieure et ayant des dimensions correspondant sensiblement à celles du panneau (1) de manière que ce dernier referme le caisson en partie supérieure dans la première configuration, les moyens de liaison du panneau (1) comprenant une ridelle (101) articulée sur un bord arrière du caisson entre une position relevée de fermeture du caisson et une position déployée correspondant à la troisième configuration du panneau (1) formant la rampe d'accès, **caractérisé en ce que** les moyens de liaison comprennent des glissières à galets avant (8) assurant un coulissement de la partie avant du panneau (1) par rapport aux parois latérales (302) du châssis (300) suivant une direction inclinée par rapport à l'horizontale, de sorte que la partie avant du panneau (1) s'abaisse à mesure qu'elle progresse vers l'arrière, les moyens de liaison comprenant en outre des glissières à galets arrière (102) assurant un coulissement des bords latéraux du panneau (1) par rapport aux bords latéraux de la ridelle (101), les galets avant (8) étant situés plus bas que les galets arrière (102) lorsque la ridelle (101) est en position relevée et que le panneau (1) est dans la seconde configuration, et **en ce que** l'ensemble comprend des premiers moyens de verrouillage (13, 115, 116) aptes à solidariser le bord avant du panneau (1) et la base de la ridelle (101) lorsque le panneau (1) est disposé dans la seconde et la troisième configuration ou entre ces dernières, ces premiers moyens de verrouillage (13, 115, 116) étant libérables manuellement.

2. Ensemble selon la revendication 1, **caractérisé en ce qu'**il comprend des seconds moyens de verrouillage (110) aptes à solidariser les bords latéraux de la ridelle (101) en position relevée avec les parois latérales (302) du caisson, ces seconds moyens de verrouillage (110) étant libérables manuellement.

3. Ensemble selon la revendication 1 ou 2, **caractérisé en ce que** le panneau (1) comprend des profilés latéraux (2, 3), notamment en aluminium, sur chacun desquels sont montés, dans leur partie avant, des supports (6, 7) de galets et des galets (8) associés, ces derniers étant déplaçables dans des rainures correspondantes conformées dans les parois latérales (302) du caisson, pour former les glissières à galets avant (8).

4. Ensemble selon la revendication 3, **caractérisé en ce que** les premiers moyens de verrouillage sont constitués de deux pênes (13) montés sur chacun des supports (6, 7) de galets, et de deux gâches (115, 116) correspondantes montées sur les bords latéraux de la ridelle (101) à la base de celle-ci.

5. Ensemble selon la revendication 3 ou 4, **caractérisé en ce qu'**il comprend des moyens d'arrêt (11) montés sur les supports (6, 7) et conformés pour coopérer avec des formes complémentaires ménagées sur les parois latérales (302) du caisson, de façon à maintenir le panneau (1) de façon stable au moins dans la première configuration.

6. Véhicule automobile comprenant un ensemble selon l'une quelconque des revendications précédentes.

7. Procédé d'utilisation d'un ensemble selon l'une quelconque des revendications 2 à 5, **caractérisé en ce qu'**il comprend les étapes suivantes :
- coulissement du panneau (1) vers l'arrière à partir de la première configuration, ce coulissement étant combiné à une élévation du panneau (1) en position sensiblement verticale, jusqu'à la seconde configuration,
- verrouillage du bord avant du panneau (1) avec la base de la ridelle (101), par les premiers moyens de verrouillage (13, 115, 116),
- libération des seconds moyens de verrouillage (110) maintenant la ridelle en position relevée,
- déploiement simultané du panneau (1) et de la ridelle (101) vers l'arrière en articulant cette dernière par rapport au bord arrière du caisson.

## Patentansprüche

1. Anordnung zur Bildung einer Zugangsrampe für Personen mit eingeschränkter Mobilität, welche dafür vorgesehen ist, den hinteren Teil eines Kraftfahrzeugs auszurüsten, aufweisend eine Platte (1), welche mit Hilfe von Verbindungsmitteln auf einem Gestell (300) montiert ist, welche dafür eingerichtet sind, um die Platte (1) in zumindest drei Einsatzkonfigurationen zu halten, unter welchen die Platte (1) einen im Wesentlichen horizontalen, zum Teil über dem Gestell (300) befindlichen Boden in einer ersten Konfiguration bildet, die Platte (1) am hinteren Ende des Gestells (300) auf im Wesentlichen vertikale Weise in eine zweite Konfiguration angehoben wird, und die Platte (1) am hinteren Ende des Gestells (300) auf geneigte Weise entfaltet wird, um in einer dritten Konfiguration eine Zugangsrampe zu bilden,
wobei die Verbindungsmittel außerdem geeignet sind, um die Führung der Platte (1) bei ihrer aufeinander folgenden Verlagerung zwischen der ersten, der zweiten und der dritten Konfiguration zu gewährleisten, wobei das Gestell (300) die allgemeine Form eines Kastens aufweist, welcher mit einem Boden (301), seitlichen Wänden (302) und einer vorderen Wand (303) versehen ist, wobei der Kasten im oberen Bereich offen ist und Abmessungen aufweist, welche im Wesentlichen jenen der Platte (1) entsprechen, so dass diese Letztere den Kasten im oberen Bereich in der ersten Konfiguration wieder schließt,
wobei die Verbindungsmittel der Platte (1) ein Seitenwandteil (101) aufweisen, welches an einem hinteren Rand des Kastens zwischen einer angehobenen Position zum Schließen des Kastens und einer entfalteten Position gelenkig angebracht ist, welche der dritten Konfiguration der die Zugangsrampe bildenden Platte (1) entspricht,
**dadurch gekennzeichnet**, das die Verbindungsmittel vordere Rollenführungen (8) aufweisen, welche ein Gleiten des vorderen Teils der Platte (1) in Bezug auf die seitlichen Wände (302) des Gestells (300) gemäß einer in Bezug auf die Horizontale geneigte Richtung derartig gewährleisten, dass sich der vordere Teil der Platte (1) absenkt, je weiter sie sich nach hinten verlagert,
wobei die Verbindungsmittel außerdem hintere Rollenführungen (102) aufweisen, welche ein Gleiten der Seitenränder der Platte (1) in Bezug auf die seitlichen Ränder des Seitenwandteils (101) gewährleisten, wobei sich die vorderen Rollen (8) tiefer als die hinteren Rollen (102) befinden, wenn sich das Seitenwandteil (101) in angehobener Position befindet und wenn die Platte (1) in der zweiten Konfiguration ist,
und dass die Anordnung erste Verriegelungsmittel (13, 115, 116) aufweist, welche geeignet sind, den vorderen Rand der Platte (1) mit der Basis des Seitenwandteils (101) fest zu verbinden, wenn die Platte (1) in der zweiten und der dritten Konfiguration oder zwischen diesen Letzteren angeordnet ist, wobei diese ersten Verriegelungsmittel (13, 115, 116) manuell lösbar sind.

2. Anordnung nach Anspruch 1, **dadurch gekennzeichnet, dass** sie zweite Verriegelungsmittel (110) aufweist, welche geeignet sind, die seitlichen Ränder des Seitenwandteils (101) in angehobener Position mit den seitlichen Wänden (302) des Kastens fest zu verbinden, wobei diese zweiten Verriegelungsmittel (110) manuell lösbar sind.

3. Anordnung nach Anspruch 1 oder 2, **dadurch gekennzeichnet, dass** die Platte (1) seitliche Profile (2, 3), insbesondere aus Aluminium, aufweist, an denen jeweils in ihrem vorderen Abschnitt Rollenträger (6, 7) und zugeordnete Rollen (8) montiert sind, wobei diese Letzteren in entsprechenden Nuten bewegbar sind, welche in den seitlichen Wänden (302) des Kastens ausgebildet sind, um die vorderen Rollenführungen (8) zu bilden.

4. Anordnung nach Anspruch 3, **dadurch gekennzeichnet, dass** die ersten Verriegelungsmittel von zwei, an jedem der Rollenträger (6, 7) montierten Riegeln (13) und von zwei entsprechenden, an den seitlichen Rändern des Seitenwandteils (101) an dessen Basis montierten Fallen (115, 116) gebildet werden.

5. Anordnung nach Anspruch 3 oder 4, **dadurch gekennzeichnet, dass** sie Stoppmittel (11) aufweist, welche an den Trägern (6, 7) montiert sind und dafür ausgebildet sind, um mit an den seitlichen Wänden (302) des Kastens eingebrachten komplementären Formen zusammenzuwirken, so dass die Platte (1) zumindest in der ersten Konfiguration stabil gehalten wird.

6. Kraftfahrzeug, umfassend eine Anordnung nach einem der vorhergehenden Ansprüche.

7. Verfahren zur Verwendung einer Anordnung nach einem der Ansprüche 2 bis 5, **dadurch gekennzeichnet, dass** es die folgenden Schritte aufweist:
- Verschieben der Platte (1) aus der ersten Konfiguration nach hinten, wobei diese Verschiebung mit einer Anhebung der Platte (1) in im Wesentlichen vertikale Position bis in die zweite Konfiguration kombiniert wird,
- Verriegeln des vorderen Randes der Platte (1) mit der Basis des Seitenwandteils (101) durch die ersten Verriegelungsmittel (13, 115, 116),
- Lösen der zweiten Verriegelungsmittel (110), welche das Seitenwandteil in angehobener Position halten,
- gleichzeitiges Entfalten der Platte (1) und des Seitenwandteils (101) nach hinten, indem diese Letztere in Bezug auf den hinteren Rand des Kasten geschwenkt wird.

## Claims

1. Assembly forming an access ramp for persons with reduced mobility, designed to be fitted to the rear of a motor vehicle, comprising a panel (1) mounted on a frame (300), via the intermediary of connection means formed so as to hold the panel (1) in at least three use configurations, among which the panel (1) forms an essentially horizontal floor at the upper part of the frame (300) in a first configuration, the panel (1) is raised essentially vertically to the rear of the frame (300) in a second configuration, and the panel (1) is deployed to the rear of the frame (300), inclined so as to form an access ramp, in a third configuration, the connection means being moreover formed so as to guide the panel (1) in its successive displacement between the first, the second and the third configuration, the frame (300) having the general shape of a box provided with a bottom (301), side walls (302) and a front wall (303), the box being open at the top and having dimensions that correspond essentially to those of the panel (1) such that the latter closes the top of the box in the first configuration, the connection means of the panel (1) comprising an end plate (101) that is articulated to a rear edge of the box between a raised position closing the box and a deployed position corresponding to the third configuration of the panel (1) forming the access ramp, **characterized in that** the connection means comprise rails with front rollers (8) allowing the front portion of the panel (1) to slide with respect to the side walls (302) of the frame (300) along a direction that is inclined with respect to the horizontal, such that the front portion of the panel (1) lowers as it progresses backwards, the connection means moreover comprising rails with rear rollers (102) allowing the side edges of the panel (1) to slide with respect to the side edges of the end plate (101), the front rollers (8) being lower than the rear rollers (102) when the end plate (101) is in the raised position and the panel (1) is in the second configuration, and **in that** the assembly comprises first locking means (13, 115, 116) that are able to secure the front edge of the panel (1) and the base of the end plate (101) when the panel (1) is arranged in the second and the third configuration, or between these configurations, these first locking means (13, 115, 116) being manually releasable.

2. Assembly according to Claim 1, **characterized in that** it comprises second locking means (110) that are able to secure the side edges of the end plate (101) in the raised position to the side walls (302) of the box, these second locking means (110) being manually releasable.

3. Assembly according to Claim 1 or 2, **characterized in that** the panel (1) comprises side profiles (2, 3), in particular made of aluminium, each of which have, mounted in their front portion, roller supports (6, 7) and associated rollers (8), these being able to be moved in corresponding channels formed in the side walls (302) of the box, so as to form the rails with front rollers (8).

4. Assembly according to Claim 3, **characterized in that** the first locking means consist of two bolts (13), mounted on each of the roller supports (6, 7), and two corresponding latches (115, 116) mounted on the side edges of the end plate (101), at the base of the latter.

5. Assembly according to Claim 3 or 4, **characterized in that** it comprises arresting means (11) mounted on the supports (6, 7) and formed so as to engage with complementary shapes created on the side walls (302) of the box, in order to hold the panel (1) in a stable manner at least in the first configuration.

6. Motor vehicle comprising an assembly according to any one of the preceding claims.

7. Method for using an assembly according to any one of Claims 2 to 5, **characterized in that** it comprises the following steps:
- sliding the panel (1) towards the rear from the first configuration, this sliding being combined with raising of the panel (1) into an essentially vertical position, into the second configuration,
- locking the front edge of the panel (1) to the base of the end plate (101) using the first locking means (13, 115, 116),
- releasing the second locking means (110) holding the end plate in the raised position,
- simultaneously deploying the panel (1) and the end plate (101) to the rear, articulating the latter with respect to the rear edge of the box.
